(19) Europäisches Patentamt

European Patent Office

Office européen des brevets

(11) **EP 1 310 436 A1**

(12) **DEMANDE DE BREVET EUROPEEN**

(43) Date de publication:
**14.05.2003 Bulletin 2003/20**

(51) Int Cl.7: **B65D 41/00**, C08L 23/04,
C08L 23/06, C08L 23/16

(21) Numéro de dépôt: **01204466.5**

(22) Date de dépôt: **09.11.2001**

(84) Etats contractants désignés:
**AT BE CH CY DE DK ES FI FR GB GR IE IT LI LU
MC NL PT SE TR**
Etats d'extension désignés:
**AL LT LV MK RO SI**

(71) Demandeur: **SOLVAY POLYOLEFINS EUROPE -
BELGIUM (Société Anonyme)
1050 Bruxelles (BE)**

(72) Inventeurs:
• **Vanden Berghe, Pascal
1300 Limal (BE)**
• **De Cambry de Baudimont, Guy
1120 Bruxelles (BE)**

(74) Mandataire: **Smith, Julian Philip Howard et al
BP International Limited,
Group Patents & Agreements,
Chertsey Road
Sunbury-on-Thames, Middlesex TW16 7LN (GB)**

(54) **Capsule à visser comprenant une composition à base de polymère de l'éthylène multimodal**

(57) Capsule à visser comprenant une composition à base d'un polymère de l'éthylène multimodal ayant une masse volumique standard (MVS) supérieure à 950 kg/m$^3$ et un indice de fluidité MI$_2$ inférieur à 10 g/10 min, ledit polymère de l'éthylène multimodal comprenant

- de 35 à 65 % en poids par rapport au poids total du polymère de l'éthylène multimodal d'une fraction de polymère de l'éthylène (A) ayant une MVS(A) supérieure à 965 kg/m$^3$ et un indice de fluidité MI$_2$(A) d'au moins 10 g/10 min, et
- de 65 à 35 % en poids par rapport au poids total du polymère de l'éthylène multimodal d'une fraction de copolymère (B) de l'éthylène et d'au moins une alpha-oléfine contenant de 3 à 12 atomes de carbone ayant un indice de fluidité MI$_2$(B) inférieur à 10 g/10 min et une teneur en alpha-oléfine(s) contenant de 3 à 12 atomes de carbone de 0,1 à 5 % molaire.

Utilisation de ces capsules à visser pour la fermeture de bouteilles contenant des aliments.

**EP 1 310 436 A1**

Printed by Jouve, 75001 PARIS (FR)

**Description**

La présente invention concerne des capsules à visser comprenant une composition à base de polymère de l'éthylène multimodal. Elle concerne également un procédé de fabrication de ces capsules et leur utilisation pour la fermeture de bouteilles, notamment de bouteilles contenant des aliments, et plus particulièrement des boissons gazeuses.

Il est connu d'utiliser du polyéthylène, et plus particulièrement du polyéthylène bimodal, pour la fabrication de capsules. C'est ainsi que les demandes de brevet US5,981,664 et WO 00/71615 décrivent des capsules obtenues par injection d'une composition comprenant deux polyéthylènes ayant des distributions des poids moléculaires différentes. Toutefois, les compositions décrites dans ces documents n'ont pas les propriétés optimales pour la fabrication de capsules, plus particulièrement pour les capsules destinées à la fermeture de bouteilles contenant des boissons gazeuses.

Nous avons maintenant trouvé des capsules à visser comprenant une composition à base de polymère de l'éthylène multimodal qui ne présentent pas les inconvénients précités.

A cet effet, la présente invention concerne des capsules à visser comprenant une composition à base de polymère de l'éthylène multimodal ayant une masse volumique standard (MVS) supérieure à 950 kg/m$^3$ et un indice de fluidité MI$_2$ inférieur à 10 g/10 min, ledit polymère de l'éthylène multimodal comprenant

- de 35 à 65 % en poids par rapport au poids total du polymère de l'éthylène multimodal d'une fraction de polymère de l'éthylène (A) ayant une MVS(A) supérieure à 965 kg/m$^3$ et un indice de fluidité MI$_2$(A) d'au moins 10 g/10 min, et
- de 65 à 35 % en poids par rapport au poids total du polymère de l'éthylène multimodal d'une fraction de copolymère (B) de l'éthylène et d'au moins une alpha-oléfine contenant de 3 à 12 atomes de carbone ayant un indice de fluidité MI$_2$(B) inférieur à 10 g/10 min et une teneur en alpha-oléfine(s) contenant de 3 à 12 atomes de carbone de 0,1 à 5 % molaire.

Dans le cadre de la présente invention, on entend désigner par capsules à visser des capsules disposant d'une fermeture filetée. Le plus souvent, ces capsules à visser sont munies d'une bande déchirable.

Par polymère de l'éthylène multimodal, on entend désigner un polymère de l'éthylène comprenant au moins deux fractions, ayant des indices de fluidité (MI$_2$) différents de façon à ce qu'il présente une distribution large ou multimodale de poids moléculaires.

Le polymère de l'éthylène multimodal mis en oeuvre dans la présente invention a généralement une masse volumique standard (MVS) qui ne dépasse pas 965 kg/m$^3$. Dans le cadre de la présente invention, la MVS est mesurée selon la norme ISO 1183-3 (1999). La MVS ne dépasse de préférence pas 960 kg/m$^3$, plus particulièrement pas 958 kg/m$^3$. La MVS est de préférence d'au moins 951 kg/m$^3$.

Le polymère de l'éthylène multimodal mis en oeuvre dans la présente invention présente de préférence un indice de fluidité (MI$_2$), mesuré à 190°C sous une charge de 2,16 kg selon la norme ASTM D 1238 (1998) inférieur à 4 g/10 min. Les valeurs de MI$_2$ inférieures à 2 g/10 min sont particulièrement préférées. L'indice de fluidité MI$_2$ est, en général, d'au moins 0,5 g/10 min, de préférence d'au moins 0,8 g/10 min; les valeurs d'au moins 1,2 g/10 min étant particulièrement recommandées. Les indices de fluidité de 1,4 à 1,8 g/10 min sont très particulièrement préférés.

La fraction de polymère de l'éthylène (A) dans le polymère de l'éthylène multimodal est de préférence d'au moins 40 %, plus particulièrement d'au moins 45 % en poids par rapport au poids total du polymère de l'éthylène multimodal. La fraction de polymère de l'éthylène (A) ne dépasse de préférence pas 60 % en poids, plus particulièrement elle ne dépasse pas 55 % en poids par rapport au poids total du polymère de l'éthylène multimodal. De bons résultats ont été obtenus avec une fraction de polymère de l'éthylène (A) de 48 à 52 % en poids par rapport au poids total du polymère de l'éthylène multimodal.

La fraction de copolymère de l'éthylène (B) dans le polymère de l'éthylène multimodal est de préférence d'au moins 40 %, plus particulièrement d'au moins 45 % en poids par rapport au poids total du polymère de l'éthylène multimodal. La fraction de copolymère de l'éthylène (B) ne dépasse de préférence pas 60 % en poids, plus particulièrement pas 55 % en poids par rapport au poids total du polymère de l'éthylène multimodal. Des fractions de copolymère de l'éthylène (B) de 48 à 52 % en poids par rapport au poids total du polymère de l'éthylène multimodal ont donné de bons résultats.

La composition mise en oeuvre dans la présente invention comprend généralement au moins 95 %, de préférence au moins 98 % en poids de l'ensemble du polymère (A) et du copolymère (B). Tout particulièrement préférée est une composition constituée essentiellement du polymère (A) et du copolymère (B).

De préférence, le polymère (A) est un homopolymère de l'éthylène. Aux fins de la présente invention, on entend désigner par homopolymère de l'éthylène (A), un polymère de l'éthylène constitué essentiellement d'unités monomériques d'éthylène et substantiellement exempt d'unités monomériques dérivées d'autres oléfines.

Par copolymère de l'éthylène avec un ou plusieurs alpha-oléfines contenant de 3 à 12 atomes de carbone (copolymère (B)), on entend désigner un copolymère comprenant des unités monomériques dérivées de l'éthylène et des unités monomériques dérivées d'au moins une alpha-oléfine contenant de 3 à 12 atomes de carbone. L'alpha-oléfine peut être sélectionnée parmi les monomères oléfiniquement insaturés, telles que le butène-1, le pentène-1, l'hexène-1, l'octène-1. Le butène-1 est particulièrement préféré. La teneur en alpha-oléfine dans le copolymère (B) est avantageusement au moins égale à 0,2 % molaire, en particulier au moins égale à 0,3 % molaire. La teneur en alpha-oléfine dans le copolymère (B) est de préférence d'au plus égale à 4 % molaire, plus précisément d'au plus égale à 3 % molaire. On obtient des résultats particulièrement performants avec des teneurs en alpha-oléfine dans le copolymère (B) de 0,5 à 2 % molaire.

La MVS du polymère (A) (MVS(A)) est de préférence d'au moins 968 kg/m$^3$, plus particulièrement d'au moins 970 kg/m$^3$. Avantageusement, le polymère (A) est caractérisé par une valeur de MI$_2$(A) d'au moins 30 g/10 min, plus particulièrement d'au moins 50 g/10 min. De préférence, la valeur de MI$_2$(A) ne dépasse pas 500 g/10 min, des valeurs inférieures à 400 g/10 min étant particulièrement préférées. Des indices de fluidité MI$_2$(A) de 80 à 200 g/10 min ont donné de bons résultats.

Avantageusement, le copolymère (B) est caractérisé par une valeur de MI$_2$(B) d'au moins 0,03 g/10 min, plus particulièrement d'au moins 0,06 g/10 min. On préfère tout particulièrement une valeur de MI$_2$(B) d'au moins 0,08 g/10 min. De préférence, la valeur de MI$_2$(B) ne dépasse pas 2 g/10 min, des valeurs d'au plus 1 g/10 min étant particulièrement préférées. On préfère tout particulièrement une valeur de MI$_2$(B) d'au plus 0,8 g/10 min. Des indices de fluidité MI$_2$(B) de 0,08 à 0,8 g/10 min ont donné de bons résultats.

Le polymère de l'éthylène multimodal mis en oeuvre dans la présente invention peut être obtenu par n'importe quelle technique appropriée. On peut par exemple procéder au mélange du polymère (A) et du copolymère (B) selon tout procédé connu tel que par exemple le mélange en fondu des deux polymères préformés. On préfère toutefois les procédés au cours desquels le polymère (A) et le copolymère (B) sont préparés dans au moins deux étapes de polymérisation successives. Généralement on procède d'abord à la préparation du polymère (A) et ensuite à la préparation du copolymère (B) en présence du polymère (A) issu de la première étape de polymérisation. Les étapes de polymérisation peuvent être effectuées chacune, indépendamment l'une de l'autre, en suspension dans un diluant hydrocarboné inerte ou en phase gazeuse. Un procédé comprenant au moins deux étapes de polymérisation en suspension dans un diluant hydrocarboné est préféré. Le diluant hydrocarboné est généralement choisi parmi les hydrocarbures aliphatiques contenant de 3 à 10 atomes de carbone. De préférence, le diluant est choisi parmi le propane, l'isobutane, l'hexane ou leurs mélanges.

Outre le polymère de l'éthylène multimodal, la composition mise en oeuvre dans la présente invention peut contenir des additifs usuels tels que des anti-oxydants, des anti-acides, des anti-UV, des colorants, des matières de charge, des agents antistatiques et des agents lubrifiants. La teneur totale en additifs ne dépasse généralement pas 5 % en poids par rapport au poids total de la composition mise en oeuvre dans la présente invention. De préférence elle ne dépasse pas 2 % en poids.

La composition mise en oeuvre pour la fabrication de capsules selon l'invention peut être obtenue selon tout moyen connu adéquat. On peut par exemple procéder en deux étapes successives, la première consistant à mélanger le polymère de l'éthylène multimodal et éventuellement les additifs à température ambiante, la deuxième étape consistant à poursuivre le mélange en fondu dans une extrudeuse. La température de la deuxième étape est généralement de 100 à 300°C, en particulier de 120 à 250 °C, en plus particulier d'environ 130 à 210 °C. Une méthode alternative consiste à introduire les additifs et éventuellement les autres composés dans le polymère d'éthylène multimodal déjà fondu.

On peut aussi préparer, dans un premier temps, un mélange-maître comprenant une première fraction du polymère de l'éthylène multimodal et les additifs éventuels, ce mélange-maître étant riche en additifs et optionnellement en autres composés. Ce mélange-maître est ensuite mélangé à la fraction restante du polymère de l'éthylène multimodal, par exemple lors de la fabrication de granules de la composition.

Les capsules à visser selon l'invention peuvent être obtenues par toute technique connue pour la fabrication d'objets. Le moulage par injection convient particulièrement bien.

Les capsules à visser selon la présente invention ont de bonnes propriétés organoleptiques qui les rendent aptes à être utilisées sur des bouteilles contenant des aliments. En outre, elles présentent une bonne résistance à la fissuration lente. Les capsules à visser selon la présente invention ont un couple d'ouverture acceptable. Elles présentent en outre de bonnes tolérances dimensionnelles. Elles conviennent donc particulièrement bien pour être utilisées sur des bouteilles contenant des boissons gazeuses. L'invention concerne dès lors également l'utilisation des capsules selon l'invention pour la fermeture de bouteilles contenant des aliments, plus particulièrement pour la fermeture de bouteilles contenant des boissons gazeuses.

Les exemples dont la description suit, servent à illustrer l'invention. La signification des symboles utilisés dans ces exemples, les méthodes de mesure et les unités de ces grandeurs sont explicitées ci-dessous.

[A] : fraction de polymère de l'éthylène (A) exprimée en % en poids par rapport au poids total du polymère de l'éthylène multimodal.

[B] : fraction de copolymère de l'éthylène (B) exprimée en % en poids par rapport au poids total du polymère de l'éthylène multimodal.

$MI_2$ : indice de fluidité du polymère de l'éthylène multimodal, exprimé en g/10 min, mesuré à 190°C sous une charge de 2,16 kg selon la norme ASTM D 1238 (1998).

$MI_2$(A) : indice de fluidité du polymère de l'éthylène (A), exprimé en g/10 min, mesuré à 190°C sous une charge de 2,16 kg selon la norme ASTM D 1238 (1998) ; dans le cas où le polymère de l'éthylène multimodal est fabriqué par un procédé de deux étapes de polymérisation successives, cette valeur est mesurée sur un échantillon du polymère (A) prélevé au premier réacteur.

$MI_2$(B) : indice de fluidité du copolymère de l'éthylène (B), exprimé en g/10 min, mesuré à 190°C sous une charge de 2,16 kg selon la norme ASTM D 1238 (1998) ; dans le cas où le polymère de l'éthylène multimodal est fabriqué par un procédé de deux étapes de polymérisation successives, cette valeur est calculée à partir des valeurs de $MI_2$ et $MI_2$(A).

MVS : masse volumique standard du polymère de l'éthylène multimodal, exprimée en $kg/m^3$, mesurée selon la norme ISO 1183-3(1999).

MVS(A) : masse volumique standard du polymère de l'éthylène (A), exprimée en $kg/m^3$, mesurée selon la norme ISO 1183-3(1999); dans le cas où le polymère de l'éthylène multimodal est fabriqué par un procédé de deux étapes de polymérisation successives, cette valeur est mesurée sur un échantillon du polymère (A) prélevé au premier réacteur.

$C_4$(B) : teneur en butène-1 du copolymère de l'éthylène (B), exprimée en %molaire. Cette teneur est calculée selon l'équation suivante

$$C_4(B) = \frac{100 \times C_4 \text{ total}}{[B]}$$

dans laquelle

$C_4$ total représente la teneur en butène-1 du polymère de l'éthylène multimodal mis en oeuvre, déterminée par résonance magnétique nucléaire en $^{13}C$, et est exprimée en %molaire.

ESCR : résistance à la fissuration lente, mesurée selon la méthode suivante : 10 capsules sont vissées sur des préformes en acier inoxydable, ensuite l'ensemble est plongé dans un bain d'eau à 60°C. Une pression hydrostatique de 8 bars est appliquée dans la préforme. La durée de vie, exprimée en heure, est enregistrée dès qu'une rupture apparaît.

ESCR-A : résistance à la fissuration lente, exprimée en heure, mesurée selon la norme ASTM D 1693 (1980), conditions A, par immersion dans une solution aqueuse contenant 10% en volume de nonylphénoxy-poly(éthylèneoxy)éthanol à 50°C, d'une plaque obtenue par compression de la composition mise en oeuvre dans la présente invention selon la norme ASTM D 1928 (1980).

OT : couple d'ouverture, mesuré selon la méthode suivante : Dix capsules sont vissées sur des bouteilles en verre de 33 cl à l'aide d'une machine de laboratoire mono tête Zalkin et de façon à fermer les capsules avec un couple de vissage fixé à 2,83 Nm. On mesure le couple de dévissage. La valeur OT est la moyenne des valeurs obtenues sur les dix capsules et est exprimée en Nm.

OI : indice d'organolepticité, mesuré selon la méthode suivante : 33 g de la composition à base de polymère d'éthylène sous forme de granules sont mis en suspension dans 1 l d'eau pendant 4 heures à 60°C. Ensuite, 6 opérateurs différents goûtent l'eau de la suspension qui est refroidie à température ambiante et apprécient son goût. Ils donnent chacun une note de 1 à 4 en comparant à un échantillon d'eau ayant subi le même traitement en l'absence de granules, la note de 1 correspondant au goût de cet échantillon d'eau. Une note élevée correspond à un mauvais goût. L'indice d'organolepticité (OI) est la moyenne des notes des 6 opérateurs.

OIS : indice d'organolepticité après exposition au soleil, mesuré selon la méthode suivante : Des bouteilles de 33 cl en verre sont remplies avec de l'eau et munies de capsules injectées 1 semaine auparavant. Ces bouteilles sont exposées pendant 48 heures à 40°C à 600 $Watt/m^2$ au spectre solaire dans un appareil Sun test. Ensuite, le goût de l'eau est testé selon la même méthode que celle décrite ci-dessus pour la détermination de l'OI.

$\varnothing_m$, $\varnothing_{min}$, $\varnothing_{max}$ : respectivement diamètre moyen, minimal et maximal calculés sur dix mesures pour des capsules ayant un diamètre nominal de 30,5 mm.

$\sigma_m$, $\sigma_{min}$, $\sigma_{max}$ : respectivement distortion moyenne, minimale et maximale du plateau de la capsule calculées sur dix mesures.

Exemples 1 et 2

Dans une extrudeuse, on a mélangé (à 190 °C) et granulé une composition constituée de :

- 99,7 parties en poids de polymère de l'éthylène multimodal fabriqué par un procédé tel que décrit dans la demande de brevet EP-0603935;
- 0,2 partie en poids de stéarate de calcium;
- 0,1 partie en poids de [tris(2,4-di-t-butyl-phényl)phosphite].

Les caractéristiques des polymères d'éthylène utilisés dans les exemples sont reprises dans le tableau 1 ci-après.

Des capsules à visser ont été fabriquées par moulage-injection sur une machine Netstal équipée d'un moule à 18 cavités.

Les caractéristiques des capsules obtenues se trouvent également dans le tableau 1 ci-après.

Exemples 3R à 5R (non conformes à l'invention)

On a répété les opérations des exemples 1 et 2, mais en utilisant des polymères de l'éthylène non-conformes à l'invention et dont les caractéristiques se trouvent dans le tableau 1 ci-après.

La comparaison des exemples 1 et 2 avec l'exemple 3R montre que les capsules à visser selon l'invention ont une résistance à la fissuration nettement supérieure à une capsule non-conforme à l'invention.

La comparaison des exemples 1 et 2 avec respectivement les exemples 5R et 4R montre que les capsules à visser selon l'invention ont une résistance à la fissuration lente nettement meilleure.

Exemples 6R et 7R (non conformes à l'invention)

Dans les exemples 6R et 7R, des polymères de l'éthylène de type monomodal ont été utilisés.

La comparaison des exemples 1 et 2 avec respectivement les exemples 7R et 6R montre que les capsules à visser selon l'invention présentent une résistance à la fissuration lente supérieure à celle des capsules à base d'un polymère de l'éthylène monomodal. La comparaison de l'exemple 1 avec l'exemple 7R montre en outre que les capsules à visser selon l'invention ont des propriétés organoleptiques (OI et OIS) et des tolérances dimensionnelles au moins aussi bonnes, voire meilleures que celles obtenues à partir d'un composition à base d'un polyéthylène monomodal, avec des valeurs de couple d'ouverture équivalentes.

Tableau 1

| Propriété | Unité | Ex. 1 | Ex. 2 | Ex. 3R | Ex. 4R | Ex. 5R | Ex. 6R | Ex. 7R |
|---|---|---|---|---|---|---|---|---|
| $MI_2$ | g/10 min | 1,6 | 1,5 | 1,6 | 10,1 | 10,1 | 2 | 1,7 |
| MVS | kg/m³ | 951,6 | 955,5 | 964,9 | 955,7 | 952,7 | 957 | 952,1 |
| $MI_2$(A) | g/10 min | 117 | 121 | 131 | 137 | 122 | - | - |
| MVS(A) | kg/m³ | 970,6 | 970,7 | 970,9 | 971 | 970,7 | - | - |
| $MI_2$(B) | g/10 min | 0,29 | 0,27 | 0,2 | 2,39 | 2,74 | - | - |
| [A] | %poids | 49,3 | 49,6 | 50 | 49,5 | 50,1 | - | - |
| [B] | %poids | 50,7 | 50,4 | 50 (*) | 50,5 | 49,9 | - | - |
| C4(B) | %molaire | 1,2 | 0,8 | 0 (*) | 1,1 | 1,6 | - | - |
| ESCR | heure | 214 | 54 | 3 | 4 | - | 18 | 58 |
| ESCR-A | heure | >500 | 217 | 16,7 | 0 | 4,4 | 12 | 43 |
| OT | Nm | 2,54 | 2,20 | 1,98 | - | - | 2,15 | 2,37 |
| OI | - | 1,4 | 1,7 | - | - | 1,8 | - | 1,8 |
| OIS | - | 2,7 | 2,5 | - | - | - | - | 3,2 |
| $\varnothing_m$ | mm | 30,5 | 30,6 | - | - | - | - | 30,6 |
| $\varnothing_{min}$ | mm | 30,4 | 30,45 | - | - | - | - | 30,35 |
| $\varnothing_{max}$ | mm | 30,6 | 30,7 | - | - | - | - | 30,8 |
| $\sigma_m$ | mm | 0,4 | 0,4 | - | - | - | - | 0,5 |
| $\sigma_{min}$ | mm | 0,18 | 0,15 | - | - | - | - | 0,3 |
| $\sigma_{max}$ | mm | 0,68 | 0,69 | - | - | - | - | 0,76 |

(*) homopolymère de l'éthylène

**Revendications**

1.  Capsule à visser comprenant une composition à base d'un polymère de l'éthylène multimodal ayant une masse volumique standard (MVS) supérieure à 950 kg/m³ et un indice de fluidité $MI_2$ inférieur à 10 g/10 min, ledit polymère de l'éthylène multimodal comprenant

- de 35 à 65 % en poids par rapport au poids total du polymère de l'éthylène multimodal d'une fraction de polymère de l'éthylène (A) ayant une MVS(A) supérieure à 965 kg/m$^3$ et un indice de fluidité MI$_2$(A) d'au moins 10 g/10 min, et
- de 65 à 35 % en poids par rapport au poids total du polymère de l'éthylène multimodal d'une fraction de copolymère (B) de l'éthylène et d'au moins une alpha-oléfine contenant de 3 à 12 atomes de carbone ayant un indice de fluidité MI$_2$(B) inférieur à 10 g/10 min et une teneur en alpha-oléfine(s) contenant de 3 à 12 atomes de carbone de 0,1 à 5 % molaire.

2. Capsule à visser selon la revendication 1, dans laquelle le polymère de l'éthylène multimodal présente un indice de fluidité MI$_2$ inférieur à 2 g/10 min.

3. Capsule à visser selon la revendication 1 ou 2, dans laquelle le polymère de l'éthylène multimodal présente une MVS d'au plus 960 kg/m$^3$.

4. Capsule à visser selon l'une quelconque des revendications 1 à 3, dans laquelle MI$_2$(B) est de 0,08 à 0,8 g/10 min.

5. Capsule à visser selon l'une quelconque des revendications 1 à 4, dans laquelle le copolymère (B) est constitué essentiellement d'unités monomériques dérivées de l'éthylène et du butène-1.

6. Capsule à visser selon l'une quelconque des revendications 1 à 5, dans laquelle le polymère de l'éthylène multimodal est obtenu par polymérisation dans au moins deux réacteurs connectés en série.

7. Capsule à visser selon l'une quelconque des revendications 1 à 6, obtenue par injection.

8. Utilisation d'une capsule à visser selon l'une quelconque des revendications 1 à 7 pour la fermeture de bouteilles contenant des aliments.

9. Utilisation d'une capsule à visser selon l'une quelconque des revendications 1 à 7 pour la fermeture de bouteilles contenant des boissons gazeuses.

Office européen
des brevets

**RAPPORT DE RECHERCHE EUROPEENNE**

Numéro de la demande

EP 01 20 4466

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X,D | WO 00 71615 A (BOREALIS TECH OY ;COCKBAIN JULIAN (GB); LINDAHL ANN DRISTIN (NO);) 30 novembre 2000 (2000-11-30) * revendications 6,7; exemples 1-5 * | 1-7 | B65D41/00 C08L23/04 C08L23/06 C08L23/16 |
| A | WO 00 32695 A (CERMELLI ISABELLE ;AGNIEL PASCAL (FR); BP CHEMICALS SNC (FR); BP C) 8 juin 2000 (2000-06-08) * le document en entier * | 1-9 | |
| A,D | EP 0 603 935 A (SOLVAY) 29 juin 1994 (1994-06-29) * le document en entier * | 1-9 | |
| A,D | US 5 981 664 A (NEUMANN PETRA ET AL) 9 novembre 1999 (1999-11-09) * le document en entier * | 1-9 | |

| DOMAINES TECHNIQUES RECHERCHES (Int.Cl.7) |
|---|
| B65D C08L |

Le présent rapport a été établi pour toutes les revendications

| Lieu de la recherche | Date d'achèvement de la recherche | Examinateur |
|---|---|---|
| MUNICH | 5 avril 2002 | Balmer, J-P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 01 20 4466

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

05-04-2002

| Document brevet cité au rapport de recherche | | Date de publication | Membre(s) de la famille de brevet(s) | | Date de publication |
|---|---|---|---|---|---|
| WO 0071615 | A | 30-11-2000 | AU | 5085700 A | 12-12-2000 |
| | | | EP | 1187876 A1 | 20-03-2002 |
| | | | WO | 0071615 A1 | 30-11-2000 |
| WO 0032695 | A | 08-06-2000 | AU | 1068200 A | 19-06-2000 |
| | | | EP | 1149134 A1 | 31-10-2001 |
| | | | WO | 0032695 A1 | 08-06-2000 |
| | | | NO | 20012580 A | 24-07-2001 |
| EP 0603935 | A | 29-06-1994 | BE | 1006439 A3 | 30-08-1994 |
| | | | AT | 191724 T | 15-04-2000 |
| | | | AU | 670976 B2 | 08-08-1996 |
| | | | AU | 5249693 A | 30-06-1994 |
| | | | BR | 9305106 A | 28-06-1994 |
| | | | CZ | 9302853 A3 | 13-07-1994 |
| | | | DE | 69328345 D1 | 18-05-2000 |
| | | | DE | 69328345 T2 | 07-12-2000 |
| | | | EP | 0603935 A1 | 29-06-1994 |
| | | | EP | 0940411 A2 | 08-09-1999 |
| | | | ES | 2147192 T3 | 01-09-2000 |
| | | | FI | 935772 A | 22-06-1994 |
| | | | GR | 3033922 T3 | 30-11-2000 |
| | | | HU | 66491 A2 | 28-11-1994 |
| | | | NO | 934729 A | 22-06-1994 |
| | | | PL | 301589 A1 | 27-06-1994 |
| | | | PT | 603935 T | 31-10-2000 |
| | | | US | 6344522 B1 | 05-02-2002 |
| | | | US | 6136924 A | 24-10-2000 |
| | | | ZA | 9309588 A | 11-08-1994 |
| US 5981664 | A | 09-11-1999 | DE | 19526340 A1 | 23-01-1997 |
| | | | AT | 180504 T | 15-06-1999 |
| | | | CN | 1191554 A ,B | 26-08-1998 |
| | | | DE | 59602011 D1 | 01-07-1999 |
| | | | WO | 9704025 A1 | 06-02-1997 |
| | | | EP | 0839164 A1 | 06-05-1998 |
| | | | ES | 2133195 T3 | 01-09-1999 |
| | | | JP | 11509568 T | 24-08-1999 |

EPO FORM P0460

Pour tout renseignement concernant cette annexe : voir Journal Officiel de l'Office européen des brevets, No.12/82